# EUROPEAN PATENT SPECIFICATION

(11) **EP 4 610 490 B1**
(45) Date of publication and mention of the grant of the patent: **11.11.2026**
(21) Application number: 24218361.4
(22) Date of filing: 09.12.2024
(51) Int. Cl.: F04B 13/00, F04B 23/02, F04B 49/10, C02F 1/42

(54) **DOSAGE DEVICE WITH POSITIVE DISPLACEMENT PUMP**
DOSIERVORRICHTUNG MIT VERDRÄNGERPUMPE
DISPOSITIF DE DOSAGE AVEC POMPE À DÉPLACEMENT POSITIF

(30) Priority: 01.03.2024 IT 202400004549
(43) Date of publication of application: 03.09.2025
(73) Proprietor: ACQUA BREVETTI S.R.L., 35035 Mestrino (PD) (IT)
(72) Inventor: BARBIERI, Graziano, 35035 MESTRINO PD (IT)
(74) Representative: Gallo, Luca

(56) References cited:
- EP-A1- 3 933 194
- EP-A1- 4 215 496
- IT-A1- PD20 110 240
- US-A1- 2005 287 009
- US-A1- 2009 016 901
- US-A1- 2012 308 409

## Description

The present invention relates to a dosage device with a positive displacement pump.

Nowadays positive displacement dosage pumps are known which comprise, inside a head to be interposed between portions of piping of a hydraulic circuit, a rotor with vanes, which rotates by virtue of the flowing fluid and which, by way of means for transmission and kinematic reduction of the rotary motion, and means for converting rotary motion to reciprocating rectilinear motion, mechanically moves associated means for drawing and pumping the liquid to be dosed.

Such means for drawing and pumping the liquid to be dosed are arranged inside a substantially rigid containing vessel for this liquid, fixed to the head, and comprise an injection plunger which is moved by means for converting rotary motion to reciprocating rectilinear motion so as to enter and exit, with its lower end, into and out of a dosing chamber.

The dosing chamber, at the opposite end with respect to the entrance for the injection plunger, is closed by a flow control element which is pushed to close by elastic means and is in communication with the inside of the container on the injection plunger side, and with a duct connected with a pipe for the dosed liquid to return to the head on the flow control element side.

The dosing chamber is generally placed proximate to the bottom of the container vessel of the liquid to be dosed, so as to take advantage as far as possible of the liquid contained in this vessel.

Such a conventional positive displacement dosage pump, although widespread and appreciated, exhibits limitations in application in heat exchangers for domestic hot water, such as boilers, water-heaters, etc., which are often located in places where it is inconvenient, owing to the available space or owing to the maneuvering space available to an installation technician, to install apparatuses in forced positions since the pipes to which the pump needs to be coupled cannot be modified without specific and extensive changes to the plumbing.

In particular, it has been found that the container vessel fixed to the head has a great bulk, which, in the above-mentioned cases of tight available space for mounting the pump, makes the entire positive displacement pump difficult to be installed and, with its volume, forces the user to use a preset quantity of substance (for example 250 g).

To solve such drawbacks the dosage device with a positive displacement pump is known which is the subject matter of Italian patent no. 1406909, by this same applicant.

This dosage device with a positive displacement pump comprises, inside a head to be interposed between portions of piping of a hydraulic circuit, a rotor with vanes, which rotates by virtue of the flowing fluid, and this rotor, by way of means for transmission and kinematic reduction of the rotary motion, and means for converting rotary motion to reciprocating rectilinear motion, mechanically moves pumping means for a liquid to be dosed which is placed in a corresponding container.

The means for converting rotary motion to reciprocating rectilinear motion, the pumping means for the liquid to be dosed, and the dosing chamber, are defined within a same housing fixed to the head, and the container for the liquid to be dosed is fixed reversibly to the housing.

Although the dosage device with a positive displacement pump has shown considerable success and appeal, it has some drawbacks.

In fact, with this conventional device, the rotor needs to be kinematically connected to the pumping means and this means it is impossible to measure the flow in a remote location/far from the pumping means, in addition to the necessity of providing complex kinematic chains with a large number of components to transmit the motion from the rotor to the pumping means, which leads to lengthy and inconvenient assembly operations.
Also, such a large number of mechanical components results, over time, in an increasing risk of breakage or malfunction owing to wear of the components.

Furthermore, the use of positive displacement pumps with a rigid container vessel available today requires the end user to periodically fill the container vessel with the liquid to be dosed and forces the user to always use the same maximum quantity of substance.

This filling operation obviously needs to be preceded by a cleaning operation to eliminate the inevitable deposits that form over time in the container vessel, and although this cleaning is not particularly difficult it still constitutes an unwanted and bothersome loss of time for the end user.

A further drawback, linked to the need to periodically fill the container vessel associated with conventional positive displacement dosage pumps, is related to hygiene and concerns the fact that filling the container vessel entails the liquid to be dosed to be introduced into the domestic plumbing system coming into contact with air, an event that determines a non-negligible risk of bacterial contamination of the liquid to be dosed.

Another main drawback of conventional dosage pumps is constituted by the fact that the liquid to be dosed, and with which the container vessel is periodically filled, is stored in rigid tanks that are not sealed, and this effectively means the liquid contained in the tank comes into contact with atmospheric air.

This contact causes, especially in hot periods and when less product is consumed, the gradual evaporation of water from the liquid and as a consequence an increase in the titer of phosphorus pentoxide; such increase in concentration can lead to the formation of crystals and encrustations of polyphosphate.

EP 4 215 496 A1 discloses a dosage device with positive displacement pump, EP 3 933 194 A1 discloses wireless communication means for communicating data with a remote user interface and luminous and/or acoustic alarm signals in the technical field of dosing pumps and IT PD20 110 240 A1 discloses a dosing pump.

The aim of the present invention is to provide a dosage device with a positive displacement pump that is capable of improving the known art in one or more of the above-mentioned aspects

Within this aim, an object of the invention is to provide a dosage device with a positive displacement pump that can be installed with greater flexibility compared to conventional positive displacement pumps, so making it possible to measure the flow even in a remote location/far from the pumping means.

Another object of the invention is to provide a dosage device with a positive displacement pump that comprises a lower number of components with respect to similar conventional devices, so allowing an easier and quicker assembly with respect to them.

Another object of the invention is to provide a dosage device that makes it possible to avoid the periodic operations of filling and cleaning the container vessel.

Another object of the invention is to provide a dosage device that reduces the risk of bacterial contamination of the liquid to be dosed with respect to similar conventional devices.

Another object of the invention is to provide a dosage device that does not determine the unwanted increase of the titer of phosphorus pentoxide and which therefore does not favor the formation of crystals and encrustations of polyphosphate.

A further object of the present invention is to overcome the drawbacks of the background art in a manner that is alternative to any existing solutions.

Another object of the invention is to provide a dosage device with a positive displacement pump that is highly reliable, easy to implement and at low cost.

This aim and these and other objects which will become better apparent hereinafter are achieved by a dosage device with a positive displacement pump, as defined in claim 1.

Further characteristics and advantages of the invention will become better apparent from the detailed description that follows of a preferred, but not exclusive, embodiment of the dosage device with a positive displacement pump, according to the invention, which is illustrated by way of non-limiting example in the accompanying drawings wherein:

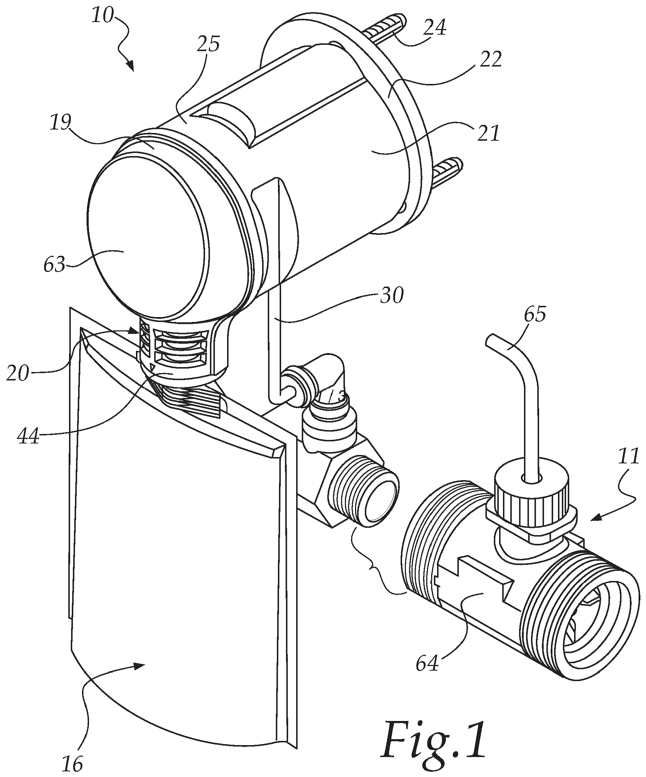

- Figure 1 is an overall perspective view of a dosage device with a positive displacement pump, according to the invention;

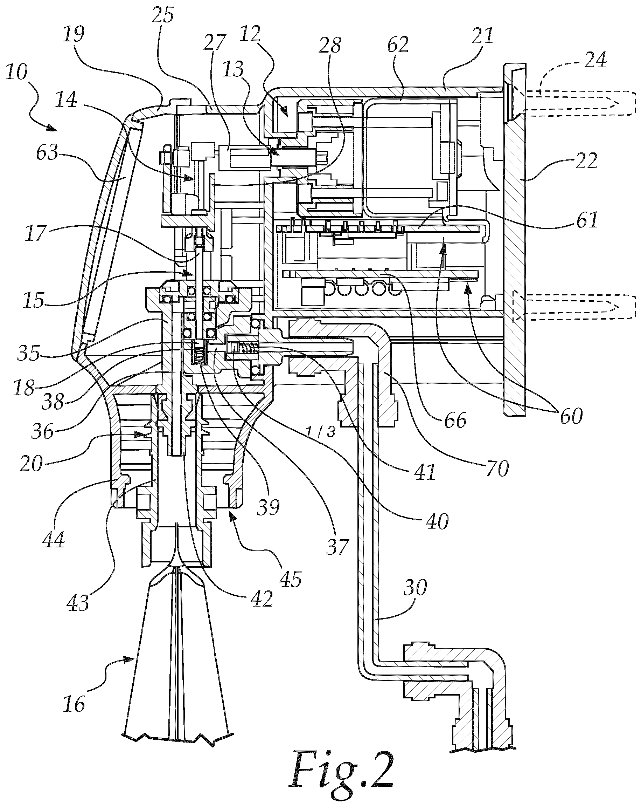

- Figure 2 is an enlarged detailed view of a cross-section of the device of Figure 1;

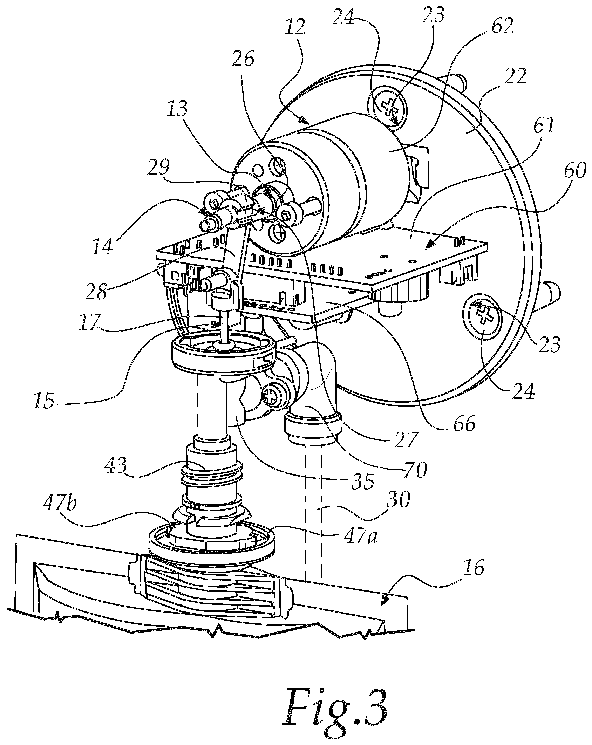

- Figure 3 is a partial internal view of the device of Figure 1.

With reference to the figures, a dosage device with a positive displacement pump, according to the invention, is generally designated by the reference numeral 10.

The device 10 comprises fluid flow rate measurement means 11 to be interposed between portions of piping of a hydraulic circuit (not shown in the figures) and connected to motor means 12.

In the figures, for the sake of simplicity, the connection between the flow rate measurement means 11 and the motor means 12 is only partially shown.

Such motor means 12, by virtue of rotary motion transmission means 13, and means for converting rotary motion to reciprocating rectilinear motion 14, mechanically move associated pumping means 15 for a liquid to be dosed which is placed in a corresponding associated container 16.

The pumping means 15 comprise an injection plunger 17 moved by the means for converting rotary motion to reciprocating rectilinear motion 14 so as to enter and exit, with its lower end, into and out of a dosing chamber 18.

In the present description, terms like "lower", "in a lower region", "below", etc. refer to the configuration for use of the device 10.

One of the peculiarities of the invention consists in that the device 10 comprises electronic means 60 for dosage control and management, such electronic means 60 being in electrical and/or data communication with the flow rate measurement means 11 and the motor means 12.

Such electronic means 60 comprise an electronic board 61, provided with a CPU (Central Processing Unit), not shown in the figures.

Advantageously, the motor means 12 comprise an electric motor 62.

Furthermore, the electronic means 60 comprise wireless communication means 66, for example a wireless LAN and/or Bluetooth module, for data communication with a remote user interface, not shown in the figures, and constituted for example by a smartphone or a tablet computer.

In this manner, it is possible to command/manage the device 10 from a distance, directly through a smartphone or a tablet computer, using a dedicated application.

The motor means 12 and the electronic means 60 are enclosed in a first substantially cup-shaped body 21, which is closed at a first end by a lid 22 that has a plurality of through holes 23 for the insertion of corresponding screws 24 for fixing to a wall.

The means for converting rotary motion to reciprocating rectilinear motion 14, the pumping means 15, and the dosing chamber 18 are defined substantially within a second substantially cup-shaped body 25, coaxial to the first substantially cup-shaped body 21, extending from the first substantially cup-shaped body 21 and is a single piece therewith.

The second substantially cup-shaped body 25 is closed, at an axial end arranged opposite to the end adjacent to the first substantially cup-shaped body 21, by a housing 19 which is provided with a transparent wall 63, constituted for example by a glass panel, which is adapted to allow viewing of the housing interior.

The device 10 comprises luminous signaling means, not indicated in the figures, which are constituted for example by LEDs (Light Emitting Diodes) adapted to indicate the operation or not of the device 10, through the transparent wall 63.

For example, there can be:
- a green LED, which is illuminated when the device 10 is in operation,
- a red LED which is illuminated when the device 10 is low on liquid to be dosed and/or in the inactive configuration and/or a malfunction or error has been detected.

The device 10 can also have acoustic means for signaling its operation and/or malfunctioning, which comprise for example a piezoelectric or electromechanical buzzer, not shown in the figures.

Advantageously, the flow rate measurement means 11 comprise a Hall effect flow-rate sensor 64 which is in electrical and data communication with the electronic board 61, by way of a cable 65.

It should be noted that, by virtue of the Hall effect flow-rate sensor 64, greater flexibility is possible compared to conventional positive displacement pumps, so making it possible to measure the flow even in a remote location/far from the pumping means.

In another embodiment, not shown in the figures, the flow-rate sensor 64 is integral with the first substantially cup-shaped body 21 and/or with the second substantially cup-shaped body 25.

Furthermore, with the Hall effect flow-rate sensor 64 it is possible to provide a device with fewer mechanical components than similar conventional devices.

The container 16 for the liquid to be dosed is fixed reversibly to the housing 19 and to the second substantially cup-shaped body 25, below them, by virtue of quick coupling means 20.

In another embodiment, not shown in the figures, the container 16 is arranged at a remote position with respect to the housing 19 and is reversibly connected to the latter via a duct.

The container 16 is constituted by a pouch made of flexible material, and the liquid inside it is vacuum-packed.

The flexible container 16 with vacuum-packed liquid ensures that, for the same liquid contained as a conventional rigid container, the bulk of the flexible container 16 is considerably less, and reduces as the liquid is drawn off and pumped into the system: the container 16, by means of the extraction by the pumping means 15, is completely emptied.

It should be understood that the vacuum packaging can be provided with conventional technologies.

The vacuum packaging of the liquid in the flexible container 16 has numerous advantages.

A first advantage relates to the fact that the vacuum packaging avoids any handling of the liquid to be dosed by the end user, which is a considerable advantage from the hygienic point of view.

Furthermore, with the vacuum packaging there is no longer any requirement for a periodic operation to clean the storage vessel of the liquid to be dosed, typically necessary in order to eliminate the inevitable deposits that form over time.

What is more, vacuum preservation prevents contact of the liquid to be dosed with air, so reducing the risk of external bacterial contamination.

Another advantage of the vacuum packaging consists in that, while with the rigid tank typical of the prior art it is necessary to make this tank of semitransparent plastic in order to make the level of liquid visible to the user, since it is known that excessive concentrations of phosphates under certain environmental conditions can favor the growth of algae, vacuum packaging can be made of completely opaque material, and the quantity of liquid still present can be easily deduced from the size of the bulge in the flexible container; the pumping means 15 of the device 10 according to the invention, in fact, are capable of completely emptying the flexible container 16, and this makes it particularly simple to grasp, as the container empties, the quantity of product remaining in the container 16, in addition to consuming the product completely, thus avoiding waste.

Another advantage of the vacuum-packaged flexible container 16 is constituted by the fact that the vacuum packaging considerably reduces the phenomenon of evaporation, so ensuring preservation of the titer of phosphorus pentoxide of the liquid to be dosed over time, and drastically reducing the formation of encrustations owing to phenomena of saline super-saturation.

In particular the rotary motion transmission means 13 comprise a first shaft 26, which exits from the electric motor 62.

The means for converting rotary motion to reciprocating rectilinear motion 14 comprise, in the following order:
- a second shaft 27, of the crankshaft type, which is coaxial to the first shaft 26, kinematically connected to it, and extends from the free end of the latter,
- a linkage 28, which is kinematically connected:
   - at one end to the second shaft 27, at a crank 29 thereof,
   - at the other end to the plunger 17 of the pumping means 15.

The plunger 17 is alternately moved, by the means for converting rotary motion to reciprocating rectilinear motion 14, to enter and exit into and out of the dosing chamber 18.

Advantageously the dosing chamber 18 is external to the container 16.

The dosing chamber 18 is provided inside a contoured body 35, fixed to the second substantially cup-shaped body 25, partially inside this and partially inside the housing 19, there being also defined, on such contoured body 35, an intake duct 36 and an outlet duct 37 for the liquid to be dosed, which are fluidically connected to the dosing chamber 18.

The outlet duct 37 is connected to an injection duct 30, which is connected to the plumbing system, by a connector 70, for example L-shaped, which is external to the first substantially cup-shaped body 21 and/or to the second substantially cup-shaped body 25 and is arranged at a shaped region/seat, not indicated in the figures, defined by the first substantially cup-shaped body 21, in its lower portion.

It should be noted that the use of such a contoured body 35 and of such a connector 70, which are made of materials suitable for contact with water, makes it possible to manufacture the first substantially cup-shaped body 21 and/or the second substantially cup-shaped body 25 of materials that are not suitable for contact with water and are therefore cheaper, so reducing the overall cost of the device 10.

Inside the contoured body 35, below the dosing chamber 18, one-way valve means are provided, which are adapted to prevent the liquid to be dosed from returning to the chamber 18 and air or water from being sucked out of the system.

Such valve means comprise a first flow control element 38, with corresponding counter-thrust spring 39, for directly closing the chamber 18, and a second, lateral flow control element 40, with corresponding counter-thrust spring 41, arranged in the outlet duct 37.

A tubular portion 42 extends from the contoured body 35 and is adapted to be inserted in a coupling sleeve 43, integral with the container 16, which is part of the quick coupling means 20.

Such quick coupling means 20 are of the bayonet type, and comprise the coupling sleeve 43, which is male, and a second sleeve 44, which is female and is integral with the housing 19 and with the second substantially cup-shaped body 25, and below these.

In particular, the second sleeve 44 is constituted by two halves, one integral with the housing 19 and in a single body with it and the other integral with the second substantially cup-shaped body 25 and in a single body with it.

The free end portion 45 of such second sleeve 44 has two symmetrical centering openings, not indicated in the figures, which are contoured to allow the passage of two corresponding extraction-preventing fins 47a, 47b, which extend radially from the coupling sleeve 43.

Within this free end portion 45 of the second sleeve 44, two seats are defined, not shown in the figures, which are recessed in the wall of the second sleeve 44 and are shaped complementarily to the extraction-preventing fins 47a, 47b, and are adapted to receive them without play following a rotation of 90° of the coupling sleeve 43.

In another embodiment, not shown in the figures, the coupling sleeve 43 is provided with one-way valve means which are adapted to prevent the liquid from returning to the pouch 16, once it has been sucked up.

In practice it has been found that the invention fully achieves the intended aim and objects by providing a dosage device with a positive displacement pump that can be installed with greater flexibility compared to conventional positive displacement pumps, so making it possible to measure the flow even in a remote location/far from the pumping means.

According to the invention, a dosage device with a positive displacement pump has been provided that comprises a lower number of components with respect to similar conventional devices, so allowing an easier and quicker assembly with respect to them.
that makes it possible to avoid the periodic operations of filling and cleaning the container vessel, and the choice of the amount to be dosed is no longer constrained by the capacity of the container vessel.

Furthermore, according to the invention, a dosage device has been provided that reduces the risk of bacterial contamination of the liquid to be dosed with respect to similar conventional devices.

It should also be noted that, according to the invention, a dosage device has been devised that does not determine the unwanted increase of the titer of phosphorus pentoxide and which therefore does not favor the formation of crystals and encrustations of polyphosphate.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A dosage device (10) with a positive displacement pump, of the type comprising fluid flow rate measurement means (11) to be interposed between portions of piping of a hydraulic circuit, which are connected to motor means (12), said motor means (12) moving mechanically by virtue of rotary motion transmission means (13), and means for converting rotary motion to reciprocating rectilinear motion (14), and associated pumping means (15) for a liquid to be dosed which is placed in a corresponding associated container (16), said pumping means (15) comprising an injection plunger (17) moved by said means for converting rotary motion to reciprocating rectilinear motion (14) so as to enter and exit, with its lower end, into and out of a dosing chamber (18), and further comprising electronic means (60) for dosage control and management, said electronic means (60) being in communication with said flow rate measurement means (11) and with said motor means (12), said motor means (12) and said electronic means (60) being enclosed in a first substantially cup-shaped body (21), which is closed at a first end by a lid (22), **characterized in that** said means for converting rotary motion to reciprocating rectilinear motion (14), said pumping means (15) and said dosing chamber (18) are substantially defined within a second substantially cup-shaped body (25), which is coaxial to said first substantially cup-shaped body (21), said second substantially cup-shaped body (25) extending from said first substantially cup-shaped body (21) and being enclosed, at an axial end which is opposite with respect to the one adjacent to said first substantially cup-shaped body (21), by a housing (19).

2. The device (10) according to claim 1, **characterized in that** said electronic means (60) comprise an electronic board (61), provided with a CPU, and said motor means (12) comprise an electric motor (62).

3. The device (10) according to claim 1, **characterized in that** said electronic means (60) comprise wireless communication means (66) for communicating data with a remote user interface.

4. The device (10) according to claim 1, **characterized in that** said housing (19) has a transparent wall (63).

5. The device (10) according to claim 1, **characterized in that** it comprises luminous and/or acoustic signaling means.

6. The device (10) according to claim 2, **characterized in that** said flow rate measurement means (11) comprise a Hall effect flow-rate sensor (64) which is in electrical and data communication with said electronic board (61).

7. The device (10) according to claim 1, **characterized in that** said container (16) is reversibly fixed to said housing (19) and to said second substantially cup-shaped body (25), below them, by virtue of quick coupling means (20).

8. The device (10) according to claim 1, **characterized in that** said container (16) is arranged at a remote position with respect to said housing (19) and is reversibly connected to the latter via a duct.

9. The device (10) according to claim 1, **characterized in that** said container (16) is constituted by a pouch made of flexible material and the liquid inside it is vacuum-packed.

10. The device (10) according to one or more of the preceding claims, **characterized in that** said rotary motion transmission means (13) comprise a first shaft (26) that exits from said electric motor (62), and said means for converting rotary motion to reciprocating rectilinear motion (14) comprise, in the following order:
• - a second shaft (27), of the crankshaft type, which is coaxial to said first shaft (26), kinematically connected to it, and extends from the free end of the latter,
• - a linkage (28), which is kinematically connected:
• - at one end to said second shaft (27), at a crank (29) thereof,
• - at the other end to said plunger (17) of said pumping means (15).

11. The device (10) according to one or more of the preceding claims, **characterized in that** said dosing chamber (18) is provided inside a contoured body (35), there being defined, on said contoured body (35), an intake duct (36) and an outlet duct (37) for the liquid to be dosed, which are fluidically connected to said dosing chamber (18).

12. The device (10) according to claim 11, **characterized in that** inside said contoured body (35), below said dosing chamber (18), there are one-way valve means (38, 39, 40, 41).

13. The device (10) according to claim 11, **characterized in that** said outlet duct (37) is adapted to be connected to an injection duct (30) through a connector (70) which is external to said first substantially cup-shaped body (21) and/or to said second substantially cup-shaped body (25) and is arranged at a shaped region/seat defined by said first substantially cup-shaped body (21).

14. The device (10) according to claims 11 and/or 12, **characterized in that** a tubular portion (42) extends from said contoured body (35) and is adapted for insertion into a coupling sleeve (43), integral with said container (16), which is part of said quick coupling means (20), said quick coupling means (20) being of the bayonet type and comprising said coupling sleeve (43), which is male, and a second sleeve (44), which is female and is integral with said housing (19) and with said second substantially cup-shaped body (25), and below these, the free end portion (45) of said second sleeve (44) having two symmetrical centering openings, which are contoured to allow the passage of two corresponding extraction-preventing fins (47a, 47b) which extend radially from said coupling sleeve (43), within said free end portion (45) of said second sleeve (44) there being defined two seats which are recessed in the wall of said second sleeve (44) and are shaped complementarily to said extraction-preventing fins (47a, 47b).

15. The device (10) according to one or more of the preceding claims, **characterized in that** said dosing chamber (18) is external to said container (16).

## Patentansprüche

1. Dosiervorrichtung (10) mit Verdrängerpumpe des Typs, der ein Element zum Messen der Durchflussmenge (11) umfasst, das zwischen Verrohrungsabschnitten eines Hydraulikkreislaufs einzufügen ist, die an eine Motoreinrichtung (12) angeschlossen sind, wobei die genannte Motoreinrichtung (12) mittels einer Drehbewegungsübertragungseinrichtung (13) mechanisch angetrieben wird, und eine Einrichtung zur Umwandlung einer Drehbewegung in eine alternierende geradlinige Bewegung (14) sowie eine zugehörige Pumpvorrichtung (15) für eine zu dosierende Flüssigkeit umfasst, die sich in einem entsprechenden zugehörigen Behälter (16) befindet, wobei die genannte Pumpvorrichtung (15) einen Einspritzkolben (17) umfasst, der durch die genannte Einrichtung zur Umwandlung der Drehbewegung in eine alternierende geradlinige Bewegung (14) bewegt wird, um mit seinem unteren Ende in eine Dosierkammer (18) ein- und auszufahren, und außerdem umfassend eine elektronische Einrichtung (60) zur Dosierungssteuerung und -verwaltung, wobei die genannte elektronische Einrichtung (60) mit dem genannten Element zum Messen der Durchflussmenge (11) und mit der genannten Motoreinrichtung (12) in Verbindung steht, wobei die genannte Motoreinrichtung (12) und die genannte elektronische Einrichtung (60) in einem ersten, im Wesentlichen becherförmigen Körper (21) eingeschlossen sind, das an einem ersten Ende durch einen Deckel (22) verschlossen ist, **dadurch gekennzeichnet, dass** die genannte Einrichtung zur Umwandlung einer Drehbewegung in eine alternierende geradlinige Bewegung (14), die genannte Pumpvorrichtung (15) und die genannte Dosierkammer (18) im Wesentlichen im Inneren eines zweiten, im Wesentlichen becherförmigen Körpers (25) definiert sind, der koaxial zu dem ersten, im Wesentlichen becherförmigen Körper (21) ist, wobei der genannte zweite, im Wesentlichen becherförmige Körper (25) von dem genannten ersten, im Wesentlichen becherförmigen Körper (21) aus verläuft und, an einem axialen Ende, das dem an den genannten ersten, im Wesentlichen becherförmigen Körper (21) angrenzenden Ende gegenüberliegt, von einem Gehäuse (19) umschlossen wird.

2. Vorrichtung (10) nach Anspruch 1, **dadurch gekennzeichnet, dass** die genannte elektronische Einrichtung (60) eine mit einer CPU ausgestattete elektronische Platine (61) umfasst und die genannte Motoreinrichtung (12) einen Elektromotor (62) umfasst.

3. Vorrichtung (10) nach Anspruch 1, **dadurch gekennzeichnet, dass** die genannte elektronische Einrichtung (60) drahtlose Kommunikationsmittel (66) für den Datenaustausch mit einer standortfernen Benutzerschnittstelle umfasst.

4. Vorrichtung (10) nach Anspruch 1, **dadurch gekennzeichnet, dass** das genannte Gehäuse (19) eine durchsichtige Wand (63) aufweist.

5. Vorrichtung (10) nach Anspruch 1, **dadurch gekennzeichnet, dass** sie optische und/oder akustische Signaleinrichtungen umfasst.

6. Vorrichtung (10) nach Anspruch 2, **dadurch gekennzeichnet, dass** das genannte Element zum Messen der Durchflussmenge (11) einen Hall-Effekt-Durchflusssensor (64) umfasst, der in elektrischer und datentechnischer Verbindung mit der elektronischen Platine (61) steht.

7. Vorrichtung (10) nach Anspruch 1, **dadurch gekennzeichnet, dass** der genannte Behälter (16) mittels einer Schnellkupplungsvorrichtung (20) reversibel an dem genannten Körper (19) und an dem genannten darunter liegenden zweiten, im Wesentlichen becherförmigen Gehäuse (25) befestigt ist.

8. Vorrichtung (10) nach Anspruch 1, **dadurch gekennzeichnet, dass** der genannte Behälter (16) im Verhältnis zu dem genannten Gehäuse (19) in einer standortfernen Position angeordnet ist und über einen Kanal reversibel an Letzteres angeschlossen ist.

9. Vorrichtung (10) nach Anspruch 1, **dadurch gekennzeichnet, dass** der genannte Behälter (16) aus einem aus flexiblem Material hergestellten Beutel besteht und die darin enthaltene Flüssigkeit vakuumverpackt ist.

10. Vorrichtung (10) nach einem oder mehreren der vorangegangenen Ansprüche, **dadurch gekennzeichnet, dass** die genannte Drehbewegungsübertragungseinrichtung (13) eine erste Welle (26) umfasst, die aus dem genannten Elektromotor (62) austritt, und die genannte Einrichtung zur Umwandlung einer Drehbewegung in eine alternierende geradlinige Bewegung (14) in der folgenden Reihenfolge Folgendes umfasst:
- eine zweite Welle (27) vom Kurbelwellentyp, die koaxial zu der genannten ersten Welle (26) verläuft, kinematisch mit dieser verbunden ist und vom freien Ende der Letzteren aus verläuft,
- ein Gestänge (28), das kinematisch wie folgt verbunden ist:
- an einem Ende mit der genannten zweiten Welle (27), und zwar an einer Kurbel (29) derselben,
- am anderen Ende mit dem genannten Kolben (17) der genannten Pumpvorrichtung (15).

11. Vorrichtung (10) nach einem oder mehreren der vorangegangenen Ansprüche, **dadurch gekennzeichnet, dass** die genannte Dosierkammer (18) im Inneren eines profilierten Körpers (35) vorgesehen ist, wobei dort, an dem genannten profilierten Körper (35), ein Einlasskanal (36) und ein Auslasskanal (37) für die zu dosierende Flüssigkeit definiert sind, die fluidisch an die genannte Dosierkammer (18) angeschlossen sind.

12. Vorrichtung (10) nach Anspruch 11, **dadurch gekennzeichnet, dass** sich im Inneren des profilierten Körpers (35), unterhalb der genannten Dosierkammer (18), Einwegventileinrichtungen (38, 39, 40, 41) befinden.

13. Vorrichtung (10) nach Anspruch 11, **dadurch gekennzeichnet, dass** der genannte Auslasskanal (37) geeignet ist, über ein Verbindungsstück (70), das sich außerhalb des genannten ersten, im Wesentlichen becherförmigen Körpers (21) und/oder des genannten zweiten, im Wesentlichen becherförmigen Körpers (25) befindet und an einem durch das genannte erste, im Wesentlichen becherförmige Körper (21) definierten geformten Bereich bzw. Sitz angeordnet ist, an einen Einspritzkanal (30) angeschlossen zu werden.

14. Vorrichtung (10) nach Anspruch 11 und/oder 12, **dadurch gekennzeichnet, dass** ein rohrförmiger Abschnitt (42) von dem genannten profilierten Körper (35) aus verläuft und zum Einsetzen in eine Kupplungshülse (43) ausgelegt ist, die mit dem genannten Behälter (16) eine Einheit bildet, welcher Teil der genannten Schnellkupplungsvorrichtung (20) ist, wobei die genannte Schnellkupplungsvorrichtung (20) vom Bajonetttyp ist und die genannte Kupplungshülse (43), die ein Steckteil ist, sowie eine zweite Hülse (44) umfasst, die ein Aufnahmeteil ist und mit dem genannten Gehäuse (19) sowie mit dem genannten zweiten, im Wesentlichen becherförmigen Körper (25) eine Einheit bildet, wobei unterhalb dieser der freie Endabschnitt (45) der genannten zweiten Hülse (44) zwei symmetrische Zentrieröffnungen aufweist, die profiliert sind, um den Durchgang von zwei entsprechenden Ausziehsicherungsrippen (47a, 47b) zu gestatten, die radial von der genannten Kupplungshülse (43) aus verlaufen, wobei im Inneren des genannten freien Endabschnitts (45) der genannten zweiten Hülse (44) dort zwei Sitze definiert sind, die in die Wandung der genannten zweiten Hülse (44) eingelassen sind und komplementär zu den genannten Ausziehsicherungsrippen (47a, 47b) geformt sind.

15. Vorrichtung (10) nach einem oder mehreren der vorangegangenen Ansprüche, **dadurch gekennzeichnet, dass** sich die genannte Dosierkammer (18) außerhalb des genannten Behälters (16) befindet.

## Revendications

1. Dispositif de dosage (10) avec pompe à déplacement positif, du type comprenant des moyens de mesure du taux de débit de fluide (11) destinés à être interposés entre des parties de tuyauterie d'un circuit hydraulique, qui sont reliés à des moyens moteurs (12), lesdits moyens moteurs (12) étant déplacés mécaniquement par l'intermédiaire de moyens de transmission de mouvement rotatif (13) et de moyens de conversion du mouvement rotatif en mouvement rectiligne alternatif (14), ainsi que de moyens de pompage associés (15) pour un liquide à doser placé dans un conteneur associé correspondant (16), lesdits moyens de pompage (15) comprenant un piston d'injection (17) déplacé par lesdits moyens de conversion du mouvement rotatif en mouvement rectiligne alternatif (14) de manière à entrer et sortir, par son extrémité inférieure, à l'intérieur et puis hors d'une chambre de dosage (18), et comprenant en outre des moyens électroniques (60) de contrôle et de gestion du dosage, lesdits moyens électroniques (60) étant en communication avec lesdits moyens de mesure du taux de débit (11) et avec lesdits moyens moteurs (12), lesdits moyens moteurs (12) et lesdits moyens électroniques (60) étant enfermés dans un premier corps sensiblement en forme de coupelle (21), qui est fermé à une première extrémité par un couvercle (22), **caractérisé en ce que** lesdits moyens de conversion du mouvement rotatif en mouvement rectiligne alternatif (14), lesdits moyens de pompage (15) et ladite chambre de dosage (18) sont sensiblement définis à l'intérieur d'un deuxième corps sensiblement en forme de coupelle (25), qui est coaxial audit premier corps sensiblement en forme de coupelle (21), ledit deuxième corps sensiblement en forme de coupelle (25) s'étendant à partir dudit premier corps sensiblement en forme de coupelle (21) et étant enfermé, à une extrémité axiale opposée à celle adjacente audit premier corps sensiblement en forme de coupelle (21), par un boîtier (19).

2. Dispositif (10) selon la revendication 1, **caractérisé en ce que** lesdits moyens électroniques (60) comprennent une carte électronique (61) pourvue d'une unité centrale de traitement (CPU), et lesdits moyens moteurs (12) comprennent un moteur électrique (62).

3. Dispositif (10) selon la revendication 1, **caractérisé en ce que** lesdits moyens électroniques (60) comprennent des moyens de communication sans fil (66) pour communiquer des données avec une interface utilisateur distante.

4. Dispositif (10) selon la revendication 1, **caractérisé en ce que** ledit boîtier (19) présente une paroi transparente (63).

5. Dispositif (10) selon la revendication 1, **caractérisé en ce qu'**il comprend des moyens de signalisation lumineux et/ou acoustiques.

6. Dispositif (10) selon la revendication 2, **caractérisé en ce que** lesdits moyens de mesure du taux de débit (11) comprennent un capteur de débit à effet Hall (64) qui est en communication électrique et de données avec ladite carte électronique (61).

7. Dispositif (10) selon la revendication 1, **caractérisé en ce que** ledit conteneur (16) est fixé de manière réversible audit boîtier (19) et audit deuxième corps sensiblement en forme de coupelle (25), situé en dessous de ceux-ci, par l'intermédiaire de moyens d'accouplement rapide (20).

8. Dispositif (10) selon la revendication 1, **caractérisé en ce que** ledit conteneur (16) est agencé à un emplacement distant dudit boîtier (19) et est relié de manière réversible à ce dernier à travers un conduit.

9. Dispositif (10) selon la revendication 1, **caractérisé en ce que** ledit conteneur (16) est constitué d'un sachet en matériau souple et que le liquide contenu est conditionné sous vide.

10. Dispositif (10) selon une ou plusieurs des revendications précédentes, **caractérisé en ce que** lesdits moyens de transmission de mouvement rotatif (13) comprennent un premier arbre (26) sortant dudit moteur électrique (62), et lesdits moyens de conversion du mouvement rotatif en mouvement rectiligne alternatif (14) comprennent, dans l'ordre suivant :
- un deuxième arbre (27), de type vilebrequin, qui est coaxial audit premier arbre (26), relié cinématiquement à celui-ci, et qui s'étend à partir de l'extrémité libre de ce dernier,
- un mécanisme articulé (28), qui est relié cinématiquement :
- à une extrémité dudit deuxième arbre (27), au niveau d'une manivelle (29) de celui-ci,
- à l'autre extrémité dudit piston (17) desdits moyens de pompage (15).

11. Dispositif (10) selon l'une ou plusieurs des revendications précédentes, **caractérisé en ce que** ladite chambre de dosage (18) est prévue à l'intérieur d'un corps profilé (35), un conduit d'admission (36) et un conduit de sortie (37) pour le liquide à doser y étant définis, sur ledit corps profilé (35), lesquels sont reliés de manière fluidique à ladite chambre de dosage (18).

12. Dispositif (10) selon la revendication 11, **caractérisé en ce que**, à l'intérieur dudit corps profilé (35), en dessous de ladite chambre de dosage (18), se trouvent des moyens à clapets anti-retour (38, 39, 40, 41).

13. Dispositif (10) selon la revendication 11, **caractérisé en ce que** ledit conduit de sortie (37) est adapté pour être relié à un conduit d'injection (30) par l'intermédiaire d'un connecteur (70) qui est externe audit premier corps sensiblement en forme de coupelle (21) et/ou audit deuxième corps sensiblement en forme de coupelle (25) et qui est agencé au niveau d'une région/siège profilé défini par ledit premier corps sensiblement en forme de coupelle (21).

14. Dispositif (10) selon les revendications 11 et/ou 12, **caractérisé en ce qu'**une partie tubulaire (42) s'étend à partir dudit corps profilé (35) et est adaptée pour être insérée dans un manchon d'accouplement (43), solidaire dudit conteneur (16), qui fait partie desdits moyens d'accouplement rapide (20), lesdits moyens d'accouplement rapide (20) étant du type à baïonnette et comprenant ledit manchon d'accouplement (43), qui est mâle, et un deuxième manchon (44), qui est femelle et solidaire dudit boîtier (19) et dudit deuxième corps sensiblement en forme de coupelle (25), et, en dessous de ceux-ci, la partie d'extrémité libre (45) dudit deuxième manchon (44) ayant deux ouvertures de centrage symétriques, qui sont profilées de manière à permettre le passage de deux ailettes anti-extraction correspondantes (47a, 47b), qui s'étendent radialement à partir dudit manchon d'accouplement (43), deux sièges y étant définis, à l'intérieur de ladite partie d'extrémité libre (45) dudit deuxième manchon (44), lesquels sont évidés dans la paroi dudit deuxième manchon (44) et qui ont une forme complémentaire auxdites ailettes anti-extraction (47a, 47b).

15. Dispositif (10) selon l'une ou plusieurs des revendications précédentes, **caractérisé en ce que** ladite chambre de dosage (18) est située à l'extérieur dudit conteneur (16).
